# EUROPÄISCHE PATENTSCHRIFT

(11) **EP 2 561 578 B1**
(45) Veröffentlichungstag und Bekanntmachung des Hinweises auf die Patenterteilung: **24.06.2020**
(21) Anmeldenummer: 11720719.1
(22) Anmeldetag: 16.03.2011
(51) Int. Cl.: H01M 10/39

(54) **ANORDNUNG ZUR SPEICHERUNG ELEKTRISCHER ENERGIE IN ELEKTROCHEMISCHEN ZELLEN MIT GROSSEM DURCHMESSER UND HOHER SPEICHERKAPAZITÄT**
ARRANGEMENT FOR STORING ELECTRIC ENERGY IN ELECTROCHEMICAL CELLS WITH A LARGE DIAMETER AND HIGH STORAGE CAPACITY
DISPOSITIF POUR L'ACCUMULATION D'ÉNERGIE ÉLECTRIQUE DANS DES CELLULES ÉLECTROCHIMIQUES DE GRAND DIAMÈTRE ET DE HAUTE CAPACITÉ D'ACCUMULATION

(30) Priorität: 16.03.2010 DE 102010002931
(43) Veröffentlichungstag der Anmeldung: 27.02.2013
(73) Patentinhaber: Helmholtz-Zentrum Dresden - Rossendorf e.V., 01328 Dresden (DE)
(72) Erfinder: STEFANI, Frank, 01099 Dresden (DE); WEIER, Tom, 01328 Dresden (DE); GERBETH, Gunter, 01328 Dresden (DE)
(86) Internationale Anmeldenummer: PCT/DE2011/050007
(87) Internationale Veröffentlichungsnummer: WO 2011/113429

(56) Entgegenhaltungen:
- GB-A- 2 225 667
- US-A- 3 775 181
- US-A1- 2008 044 725
- US-A1- 2008 074 083
- DIRK RANNACHER ET AL: "Cylindrical Korteweg-de Vries solitons on a ferrofluid surface", NEW JOURNAL OF PHYSICS, INSTITUTE OF PHYSICS PUBLISHING, BRISTOL, GB, Bd. 8, Nr. 6, 1. Juni 2006 (2006-06-01), Seiten 108-108, XP020107754, ISSN: 1367-2630, DOI: DOI:10.1088/1367-2630/8/6/108

## Beschreibung

### Technisches Gebiet

Die Erfindung betrifft eine Anordnung zur Energiespeicherung in elektrochemischen Zellen mit großem Durchmesser und hoher Speicherkapazität. Ein bevorzugtes Einsatzgebiet der Erfindung ist die Nutzung zur Bereitstellung von Regelenergie.

### Stand der Technik

Der Ausgleich von Angebot und Nachfrage bei der Versorgung mit elektrischer Energie stellt ein großes Problem der Energiewirtschaft dar, welches durch die verstärkte Nutzung zeitlich schwankender erneuerbarer Energieformen wie Windenergie und Sonnenenergie noch verschärft wird.

Es wurden verschiedene Formen der Energiespeicherung vorgeschlagen, um den notwendigen tages- und jahreszeitlichen Ausgleich zu gewährleisten. Traditionell werden hierzu Pumpspeicherwerke genutzt, aber auch Druckluftspeicher und Salzschmelzen finden inzwischen Verwendung.

Elektrochemische Energiespeicher können für diesen Zweck ebenfalls eingesetzt werden. Seit der Einführung des Bleiakkumulators entstand eine große Zahl weiterer Systeme, von der sich nur ein relativ kleiner Teil für den praktischen Einsatz durchsetzen konnte. Die Nutzungsdauer, d. h. die maximale Zyklenzahl, von Akkumulatoren mit festen Elektroden ist in der Regel durch alterungsbedingte Veränderungen der Elektrodenstrukturen begrenzt. Diesem Problem kann man begegnen, indem man flüssige Elektrodenmaterialien benutzt. Beispiele für Akkumulatoren mit flüssigen Elektroden sind die wiederaufladbaren Natrium-Schwefel (NaS) und Natrium-Nickelchlorid (ZEBRA) Batterien. Bei beiden Systemen ist der Elektrolyt eine β"-Al₂O₃-Keramik, die bei höheren Temperaturen NatriumIonen leitet (Festelektrolyt). Diese Keramik ist zerbrechlich und empfindlich gegenüber thermischen Schocks, was in der Praxis den verwendbaren Durchmesser einzelner Zellen auf einige Zentimeter limitiert. Typischerweise müssen etwa 20 000 Einzelzellen zusammengeschaltet werden, um eine Leistung von 1 MW bereitzustellen. Um den Festelektrolyten nicht mechanisch zu belasten, sollten die Zellen über ihre gesamte Nutzungsdauer hinweg möglichst auf Betriebstemperatur (∼300 °C) gehalten werden, damit die Elektrodenmaterialien flüssig bleiben, was entsprechende thermische Verluste nach sich zieht.

In GB 2 225 667 A ist eine elektrochemische Zelle mit einer Anode, einem Separator und einer Kathode beschrieben, wobei die Anode aus geschmolzenem Alkalimetall besteht, der Separator ein fester Elektrolytleiter für Ionen des Anodenmaterials ist, und die Kathode eine elektronisch leitfähige elektrolytpermeable poröse Matrix ist, die mit einem flüssigen Elektrolyten imprägniert ist und eine elektrochemisch aktive Kathodensubstanz enthält, wobei der Separator als Rohr ausgebildet sein kann.

In US 2008044725 A wurde ein elektrochemischer Energiespeicher vorgeschlagen, mit dem die in Absatz [0004] genannten Nachteile überwunden werden sollen. Als positive Elektrode (Kathode, die Benennung erfolgt konventionell nach der Funktion beim Entladen) fungieren hier Halbmetalle oder Metalle wie Arsen, Antimon, Bismut, Selen oder Tellur, die im flüssigen Zustand eine genügend hohe elektrische Leitfähigkeit aufweisen. Als negative Elektrode (Anode) werden Magnesium, Kalium, Natrium, Lithium, Kalzium, Cadmium und Zink vorgeschlagen. Ein wichtiger Aspekt besteht in der Verwendung eines flüssigen Elektrolyten zwischen Anode und Kathode. Die Materialien werden so gewählt, dass die Dichte des Elektrolyten größer als die des flüssigen Anodenmaterials und die Dichte des flüssigen Kathodenmaterials größer als die Dichte des Elektrolyten ist. Unter dieser Voraussetzung entsteht eine natürliche Dichteschichtung der Materialien, so dass die Notwendigkeit des Einsatzes eines porösen Diaphragmas entfällt. Diese Möglichkeit war im Übrigen schon in US 3245836 A angedeutet worden. Als typische Stromdichte j, die mit einer solchen Anordnung erzielbar sein soll, wird in US 2008044725 A ein Wert von 10 bis 50 kA/m² angegeben, wobei der Patentanspruch 11 auch für Anordnungen mit höheren Stromdichten erhoben wird.

Ein wesentlicher Nachteil der vorgeschlagenen Anordnung besteht in der durch physikalische Prinzipien bedingten Beschränkung des maximalen Stroms der Zelle. Die in US 2008044725 A behauptete beliebige Skalierbarkeit bis zu Größen von mehreren Kubikmetern (Zitat: "In one approach, scalability is exploited in a single large cell of the invention - on the order of a few meters cubed ...") ist in Wirklichkeit nicht erreichbar. Bei gegebener Stromdichte wird nämlich der maximale Durchmesser der Zelle durch das Einsetzen einer bekannten Strom-Instabilität in flüssigen Leitern limitiert. Diese Instabilität wurde zuerst 1972 von VANDKUROV, Y.V. in "Theory for the stability of a star with toroidal magnetic field." (Soviet Astronomy. 1972, Band 16, S. 265-272) sowie 1973 von TAYLER, R.J. in "Adiabatic stability of stars containing magnetic fields. 1 - Torodial fields." (Monthy Notices of the Royal Astronomical Society. 1973, Band 161, S. 365-380) beschrieben, und für den Fall von zylindrischen Anordnungen von Rüdiger u.a. RÜDIGER, G. Theory of current-driven instability experiments in magnetic Taylor-Couette flows. Physical Review E76, 2007 S. 053309. RÜDIGER, G. Tayler instability of toroidal magnetic fields in MHD Taylor-Couette flows. Astronomische Nachrichten, 2010 Nr. 331, S. 121-129. im Detail berechnet. Diese Instabilität, die im Folgenden als Tayler-Instabilität bezeichnet wird, bewirkt, dass elektrische Ströme in Flüssigmetallen instabil werden, wenn sie (in Abhängigkeit von den konkreten Stoffparametern) einige kA überschreiten. Verbunden mit dieser Instabilität kommt es zu einer sehr starken Strömung innerhalb des flüssigen Metalls, was zu einer kräftigen gegenseitigen Durchmischung von anodischem, elektrolytischem und kathodischem Material führen und damit die Anordnung als Energiespeicher unbrauchbar machen würde.

### Technische Aufgabe

Der Erfindung liegt die Aufgabe zugrunde, eine elektrochemische Zelle zur Energiespeicherung anzugeben, deren Funktionsweise auch bei hohen Durchmessern nicht durch das Auftreten der Tayler-Instabilität beeinträchtigt wird.

### Technische Lösung

Die Aufgabe wird gelöst mit den Merkmalen des ersten Patentanspruchs. Vorteilhafte Ausführungen sind in den Unteransprüchen angegeben.

### Vorteilhafte Wirkungen

Der damit mögliche Übergang zu höheren Durchmessern führt zu einer signifikanten Erhöhung der Energiespeicherkapazität pro Zelle und damit zu einer bedeutenden Kostenreduktion im Vergleich zu einer entsprechenden Anordnung aus vielen Zellen mit kleinen Durchmessern.

### Darstellung der Erfindung

Die Erfindung fußt wesentlich auf die angenommenen stabilen Schichtung der anodischen, elektrolytischen und kathodischen Flüssigkeiten. Bei einer durch die elektrochemischen Prozesse vorgegebenen Stromdichte (in der Größenordnung von 10 bis 50 kA/m²) gibt es für jede der drei Flüssigkeiten einen kritischen Durchmesser, bei dem die Tayler-Instabilität einsetzt und zu einer starken gegenseitigen Durchmischung der Flüssigkeiten führt. Der kritische Durchmesser der Gesamtanordnung wird dabei durch den kleinsten der kritischen Durchmesser der verwendeten Flüssigkeiten bestimmt.

Die vorliegende Erfindung beruht auf der Tatsache, dass durch den Einbau eines isolierenden Innenrohrs das Einsetzen der Tayler-Instabilität zu wesentlich höheren kritischen Durchmessern verschoben werden kann. Geht man vereinfachend von Kreiszylindern aus, so kann für einen gegebenen Außenradius rₐ der Fluide sowie eine gegebene maximale Stromdichte j ein solcher Radius rᵢ des isolierenden Innenzylinders angegeben werden, bei dem ein maximaler Gesamtstrom unter der Voraussetzung des Nichteinsetzens der Tayler-Instabilität erreicht werden kann.

Die für das Einsetzen der Tayler-Instabilität entscheidende dimensionslose Kennzahl ist die sogenannte Hartmann Zahl, Ha=B r (σ/ρ ν)^{1/2}, wobei B das durch den Strom erzeugte Magnetfeld, r der Radius des Zylinders, σ die elektrische Leitfähigkeit des Fluids, ρ seine Dichte und v seine kinematische Viskosität ist. Bei gegebenem Stromfluss sowie Radius wird ein Fluid um so eher Tayler-instabil, je höher seine elektrische Leitfähigkeit und je kleiner seine Dichte und kinematische Viskosität sind.

Da die kritischen Durchmesser für die Elektrolyten aufgrund ihrer geringen elektrischen Leitfähigen sehr groß sind, ist es ausreichend, im folgenden die kritischen Durchmesser nur für einige als Anoden- und Kathodenmaterial in Betracht kommende flüssige Metalle und Halbmetalle zu berechnen. Dabei wird das Berechnungsverfahren gemäß RÜDIGER, G. Theory of current-driven instability experiments in magnetic Taylor-Couette flows. Physical Review E76, 2007 S. 056309. verwendet und auf verschiedene Stoffparameter und Radienverhältnisse rᵢ/rₐ angewandt. Zunächst wird die in US 2008044725 A präferrierte Kombination von Magnesium (Anode) und Antimon (Kathode) betrachtet. Die entsprechenden Stoffparameter bei der angegebenen Arbeitstemperatur von 700°C sind σ = 3,61 x 10⁶ S/m, ρ = 1,54 x 10³kg/m³, v = 6,74 x 10⁻⁷ m²/s für Magnesium und σ = 0,85 x 10⁶S/m, ρ = 6,45 x 10³kg/m³, v=2,01 x 10⁻⁷ m²/s für Antimon.

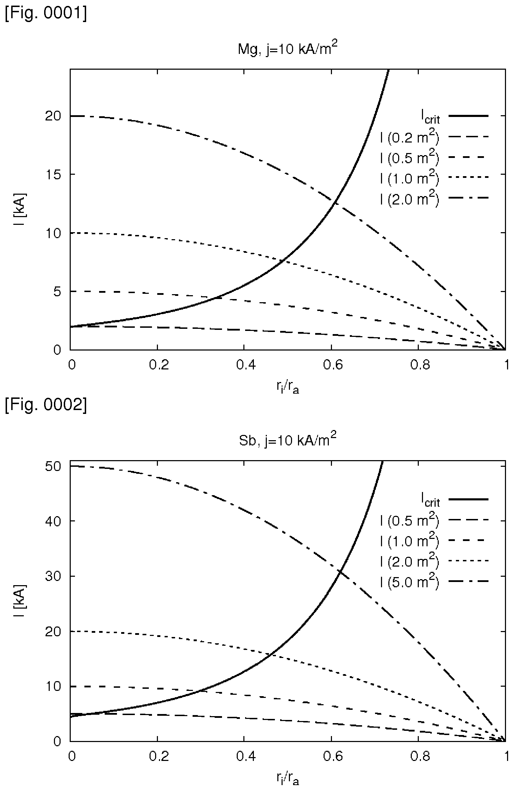

Für Magnesium zeigt Abbildung 1 den kritischen Strom I_{crit} in Abhängigkeit vom Radienverhältnis rᵢ/rₐ. Des Weiteren sind vier Kurven gezeigt, die den resultierenden Gesamtstrom im Ringspalt zwischen rᵢ und rₐ unter der Voraussetzung angeben, dass die Stromdichte 10 kA/m² beträgt. Für rᵢ = 0 m beträgt der kritische Strom für das Einsetzen der Tayler-Instabilität etwa 1,9 kA. Bei der angenommenen Stromdichte von 10 kA/m² entspräche dies einer kritischen Fläche von 0,19 m², also einem kritischen Radius rₐ des Fluids von 0,26 m. Für größere Radien würde die Tayler-Instabilität zu einer sehr starken Strömung innerhalb des flüssigen Magnesiums führen, was zu einer kräftigen gegenseitigen Durchmischung von anodischem, elektrolytischem und kathodischem Material führen und die Anlage damit unbrauchbar machen würde.

Die erfindungsgemäße Anordnung basiert auf der monoton wachsenden Abhängigkeit des für das Einsetzen der Tayler-Instabilität kritischen Stromes I_{crit} von rᵢ / rₐ. Offensichtlich ist es möglich, durch Einbringen eines isolierenden Innenzylinders mit Radius rᵢ den kritischen Strom stark zu erhöhen. Die Schnittpunkte der Kurve I_{crit} mit den Kurven der Ströme für verschiedene Gesamtflächen πrₐ² zeigen, dass sich mit wachsendem rᵢ durchaus große kritische Flächen und damit große kritische Ströme erreichen lassen. Zum Beispiel ist ein Gesamtstrom von etwa 12,5 kA für πrₐ²= 2 m² möglich, wenn rᵢ/rₐ etwa gleich 0,61 gewählt wird.

Abbildung 2 zeigt die entsprechenden Kurven für das Kathodenmaterial Antimon. Aufgrund der Stoffparameter liegt hier der kritische Strom für rᵢ = 0 etwa bei 4,4 kA. Daraus wird ersichtlich, dass in einer Zelle mit dem Anodenmaterial Magnesium und dem Kathodenmaterial Antimon das Einsetzen der Tayler-Instabilität vom Magnesium determiniert wird.

Im Folgenden wird noch der Fall einer elektrochemischen Zelle betrachtet, in der Natrium als Anodenmaterial verwendet wird. Dies ist in US 3245836 A. vorgeschlagen worden, wobei als Kathodenmaterial Zinn vorgesehen wurde. Weiterhin wird die ebenfalls mögliche Kombination Natrium-Bismut untersucht, die aufgrund der niedrigen Schmelztemperaturen beider Metalle schon bei 300 °C arbeiten könnte. Bei dieser Temperatur wäre die Leitfähigkeit von Natrium besonders hoch, was zu einem Einsetzen der Tayler-Instabilität bei besonders niedrigen Strömen führen würde.

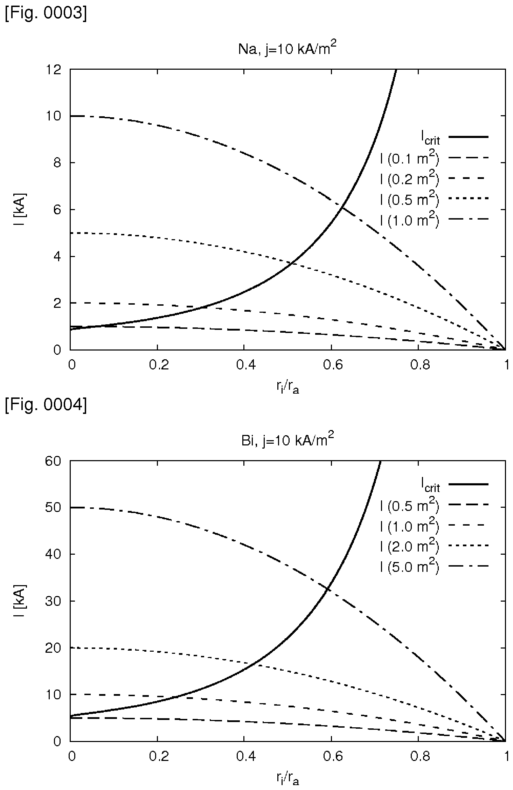

Abbildung 3 zeigt, für Natrium bei 300 °C (σ = 5,99 x 10⁶S/m, ρ = 0,878 x 10³kg/m³, v = 3,94 x 10⁻⁷ m²/s), den kritischen Strom I_{crit} in Abhängigkeit vom Radienverhältnis r_{i/}rₐ. Wiederum sind vier Kurven dargestellt, die den resultierenden Gesamtstrom im Ringspalt zwischen rᵢ und rₐ unter der Voraussetzung angeben, dass die Stromdichte 10 kA/m² beträgt. Für rᵢ = 0 m beträgt der kritische Strom für das Einsetzen der Tayler-Instabilität etwa 0,86 kA. Bei der angenommenen Stromdichte von 10 kA/m² entspräche dies einer kritischen Fläche von 0,086 m², also einem kritischen Radius rₐ des Fluids von 0,16 m. Wiederum läßt sich der Gesamtstrom durch Einfügen eines inneren Zylinders erhöhen, z.B. auf etwa 6 kA für πrₐ² = 1 m², wenn rᵢ/rₐ etwa gleich 0,62 gewählt wird.

Abbildung 4 zeigt die entsprechenden Kurven für das angenommene Anodenmaterial Bismut bei 300 °C (σ = 0,78 x 10⁶S/m, ρ = 0,03 x 10³kg/m³, v = 1,72 x 10⁻⁷ m²/s). Hier liegt der kritische Strom für rᵢ = 0 m etwa bei 5,3 kA. Wie schon in der besprochenen Kombination Magnesium-Antimon, wird also auch in der Kombination Natrium-Bismut das Einsetzen der Tayler-Instabilität vom (besser leitfähigen) Anodenmaterial bestimmt.

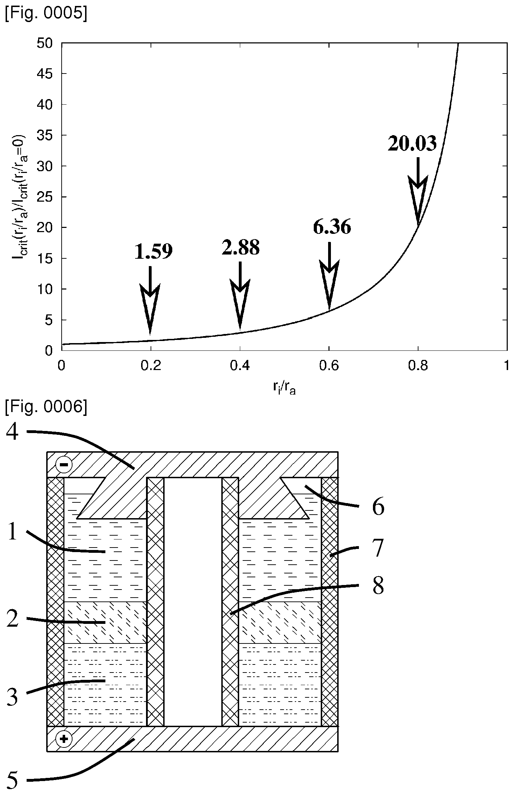

In jedem Fall läßt sich durch den Einbau eines isolierenden Innenzylinders eine signifikante Erhöhung des kritischen Stromes in der Zelle erreichen. Der Erhöhungsfaktor (in Bezug auf den kritischen Strom bei rᵢ = 0 m) ist unabhängig vom verwendeten Material. Seine Abhängigkeit von rᵢ/rₐ ist in Abbildung 5 dargestellt, wobei die konkreten Werte für die ausgewählten Radienverhältnisse 0,2; 0,4; 0,6 und 0,8 separat ausgewiesen sind.

Der durch die Tayler-Instabilität limitierte maximal mögliche Radius der Zelle ist in der Praxis eher als eine zu optimistische Schätzung anzusehen, da im Fall von inhomogenen Stromverteilungen die Instabilität wesentlich eher einsetzen kann. Er gibt jedoch eine sinnvolle obere Grenze des Durchmessers an, jenseits derer ein stabiler Betrieb der elektrochemischen Zelle prinzipiell nicht mehr möglich ist.

Eine weitere sehr effiziente Möglichkeit zur Erhöhung des maximalen Stroms der Zelle besteht darin, dass ein der Stromrichtung in der Zelle entgegengerichteter Strom durch das Innere des als hohl angenommenen Innenrohrs geleitet wird. Aus praktischen Gründen bietet sich dafür besonders entweder der Kathodenstrom oder der Anodenstrom der Zelle an. Gemäß den Untersuchungen in RÜDIGER, G. Theory of current-driven instability experiments in magnetic Taylor-Couette flows. Physical Review E76, 2007 S. 056309. würde in diesem Fall die Tayler-Instabilität, zumindest im Idealfall unendlich langer Zylinder, auch für beliebig hohe Ströme nicht mehr auftreten. Eine ähnlich stabilisierende Wirkung läßt sich auch durch einen der Stromrichtung in der Zelle gleichgerichteten Strom geeigneter Stärke bewirken.

Die spezielle Auswahl der Materialien für die Elektroden ist für die im vorliegenden Patent beschriebenen Lösungen zur Stabilisierung der flüssigen Elektroden unerheblich. Vorausgesetzt wird lediglich, dass es sich um elektrisch gut leitfähige (elektrische Leitfähigkeit σ größer als 10⁵ S/m) flüssige Metalle, Halbmetalle oder deren Legierungen handelt.

Im Folgenden werden Ausführungsbeispiele der Anordnung und des Verfahrens angegeben.

### Weg zur Ausführung der Erfindung

Die Erfindung wird nachstehend an fünf nicht einschränkenden Ausführungsbeispielen für die Anordnung und einem Ausführungsbeispiel für das Verfahren näher beschrieben.

Abbildung 6 zeigt eine Prinzipdarstellung der erfindungsgemäßen Anordnung. Zu dieser Ausführungsform gehört ein flüssiges Anodenmaterial (1), ein flüssiger Elektrolyt (2), ein flüssiges Kathodenmaterial (3), ein fester elektrischer Leiter (4) im Kontakt mit dem Anodenmaterial, ein fester elektrischer Leiter (5) im Kontakt mit dem Kathodenmaterial, ein Ausgleichsvolumen (6), ein isolierender Container (7), sowie ein isolierendes Innenrohr (8). In dieser Ausführungsform wird Energie gespeichert, indem am negativen Pol die Metall-Ionen zu einem flüssigen Metall reduziert werden, und am positiven Pol die Metall- oder Halbmetall-Ionen zu einem flüssigen Metall- oder Halbmetall oxidiert werden.

Dabei dient das isolierende Innenrohr dazu, das Auftreten der Tayler-Instabilität und damit die gegenseitige Durchmischung der Materialien, aus denen Kathode, Elektrolyt, und Anode bestehen, zu verhindern. Der Radius des Innenrohres wird mindestens so groß gewählt, dass die bei vorgegebenem Außenradius (und vorgegebenen Materialparametern) entstehenden elektrischen Ströme unterhalb der in den Abbildung 1 bis Abbildung 5 angegebenen kritischen Ströme für das Auftreten der Tayler-Instabilität liegen.

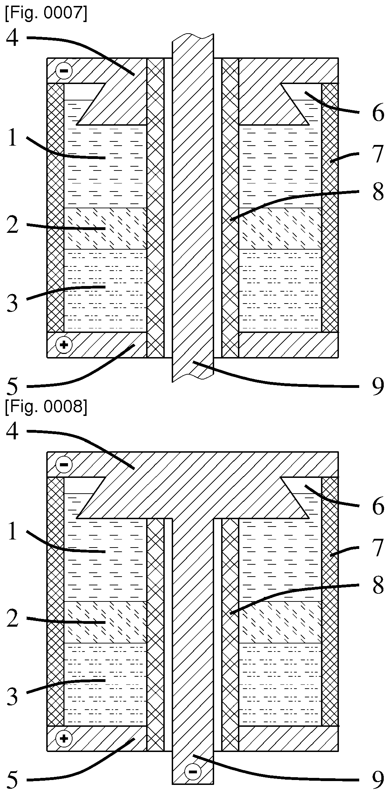

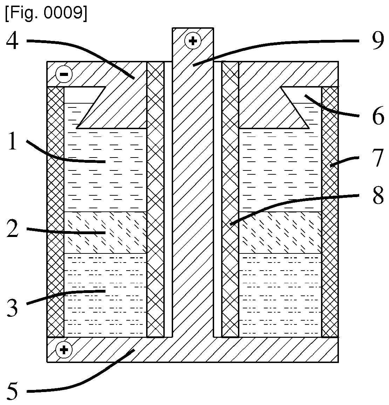

Abbildung 7 zeigt eine Erweiterung der erfindungsgemäßen Anordnung, in der ein der Stromrichtung in der Zelle entgegengerichteter Strom durch einen elektrischen Leiter (9) im Inneren des Innenrohres geleitet wird. Auf diese Weise entsteht eine Magnetfeldkonfiguration, in der keine Tayler-Instabilität mehr auftritt. Das gilt insbesondere für die Anordnungen gemäß Abbildung 8 und Abbildung 9, in denen entweder der Anodenstrom durch einen elektrischen Leiter (9) im Inneren des Innenrohrs nach unten (Abbildung 8) oder der Kathodenstrom durch einen elektrischen Leiter (9) im Inneren des Innenrohrs nach oben (Abbildung 9) geleitet wird.

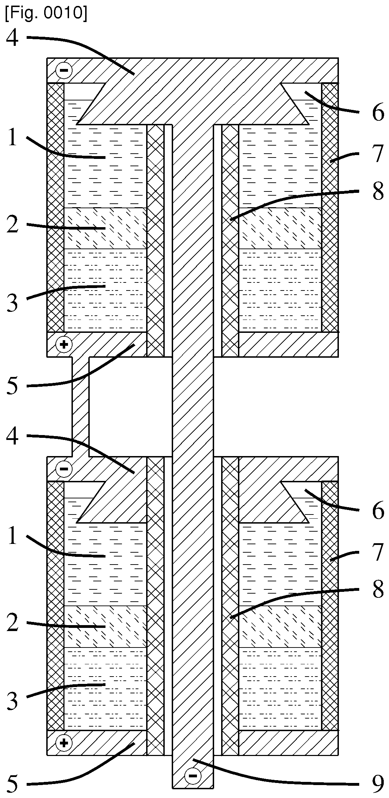

Abbildung 10 zeigt, wie das Prinzip der Stromdurchführungen durch einen Leiter im Inneren des Innenrohrs auf mehrere kombinierte Zellen ausgedehnt werden kann. Im Ausführungsbeispiel wird der Anodenstrom der obersten Zelle durch alle Zellen nach unten geführt. Die in Abbildung 10 gezeigten zwei Zellen dienen als Illustration des Prinzips, und können durch mehr als zwei Zellen ersetzt werden. In entsprechender Weise kann auch der Kathodenstrom durch kombinierte Zellen nach oben geführt werden.

Weiterhin ist es möglich, dass die kombinierten Zellen nicht wie Abbildung 10 dargestellt übereinander angeordnet sind, sondern nebeneinander angeordnet sind.

Die obigen Berechnungen erfolgen aus numerischen Gründen an zylindrischen Zellenanordnungen. Es ist anzunehmen, dass diese Anordnungen unter anderem auf quaderförmige Anordnungen erweiterbar sind. In diesem Fall ist es einerseits sinnvoll, dass das Innenrohr keine Kreisfläche als Grundfläche besitzt, sondern dies Fläche des "Innenrohres" sich an der Grundfläche der Anordnung, beispielsweise rechteckig oder quadratisch, orientiert. Bei einer nicht zylindrischen Anordnung kann es weiterhin sinnvoll sein, die Grundfläche der Anordnung in Teilsegmente aufzuteilen und in jedem dieser Teilsegmente ein elektrisch isolierendes Innenrohr zu plazieren, wobei das Innenrohr auch ein stabförmiges Aussehen besitzen kann. In beiden Fällen wird das Verhältnis der Summe der Fläche Aᵢⱼ, die die "elektrisch isolierenden Innenrohre/ -stäbe" in den einzelnen Teilsegmenten bilden, zur Gesamtfläche der Anordnung Aₐ in etwa mit dem Verhältnis (r_{i/}rₐ)², wenn man die Berechnungen für eine zylindrische Anordnungen mit folgenden Annahmen Aₐ∼πrₐ² und ∑Aij∼πrᵢ² annimmt, übereinstimmen.

Das Verfahren zur Speicherung elektrischer Energie besteht darin, dass eine der erfindungsgemäßen Anordnungen mit einem externen Stromkreis verbunden wird, wobei an der Kathode die Metall-Kationen zu einem flüssigen Metall reduziert werden, und an der Anode die Metall- oder Halbmetall-Anionen zu einem flüssigen Metall- oder Halbmetall oxidiert werden.

## Patentansprüche

1. Anordnung zur Speicherung elektrischer Energie in einer elektrochemischen Zelle, bestehend aus einer Schichtung einer flüssigen Anode (1), eines flüssigen Elektrolyten (2) und einer flüssigen Kathode (3), wobei die Anode (1) und die Kathode (3) jeweils aus einem flüssigen Metall, Halbmetall oder einer flüssigen Metall- oder Halbmetalllegierung bestehen, und wobei die Anordnung ein elektrisch isolierendes Innenelement (8) in Form eines Innenrohres oder Innenstabes aufweist, **dadurch gekennzeichnet, dass** das Innenelement (8) in der Schichtung entlang der vertikalen Achse der Anordnung durch die Anode (1), den Elektrolyten (2) und die Kathode (3) verläuft, wobei die flüssige Anode (1), der flüssige Elektrolyt (2) und die flüssige Kathode (3) außerhalb des Innenelements (8) angeordnet sind.

2. Anordnung nach Anspruch 1, **dadurch gekennzeichnet, dass** das Innenelement (8) als Innenrohr ausgebildet ist und die Anordnung einen elektrischen Leiter (9) aufweist, der in dem Innenrohr (8) verlaufend angeordnet ist, wobei die Anordnung zum Hindurchleiten eines der Stromrichtung in der Zelle entgegengerichteten elektrischen Stromes durch den elektrischen Leiter (9) ausgebildet ist.

3. Anordnung nach Anspruch 2, **dadurch gekennzeichnet, dass** die Anordnung zum Hindurchführen des elektrischen Stromes von der Anode (1) durch den elektrischen Leiter (9) ausgebildet ist.

4. Anordnung nach Anspruch 2, **dadurch gekennzeichnet, dass** die Anordnung zum Hindurchführen des elektrischen Stromes von der Kathode (3) durch den elektrischen Leiter (9) ausgebildet ist.

5. Anordnung nach Anspruch 3, **dadurch gekennzeichnet, dass** die Anordnung mehrere kombinierte Zellen mit jeweils einem Innenrohr (8) aufweist, wobei die Anordnung derart ausgebildet ist, dass der elektrische Strom von der Anode (1) durch einen elektrischen Leiter (9) im Inneren der Innenrohre der mehreren kombinierten Zellen jeweils nach unten geleitet wird.

6. Anordnung nach Anspruch 4, **dadurch gekennzeichnet, dass** die Anordnung mehrere kombinierte Zellen mit jeweils einem Innenrohr (8) aufweist, wobei die Anordnung derart ausgebildet ist, dass der Strom von der Kathode (3) durch einen elektrischen Leiter (9) im Inneren der Innenrohre der mehreren kombinierten Zellen jeweils nach oben geleitet wird.

7. Anordnung nach Anspruch 1, **dadurch gekennzeichnet, dass** das Innenelement (8) als Innenrohr ausgebildet ist und die Anordnung einen elektrischen Leiter (9) aufweist, der in dem Innenrohr (8) verlaufend angeordnet ist, wobei die Anordnung zum Hindurchleiten eines der Stromrichtung in der Zelle gleichgerichteten elektrischen Stromes durch den Leiter (9) ausgebildet ist.

8. Anordnung nach Anspruch 1, **dadurch gekennzeichnet, dass** entlang der vertikalen Achse der Anordnung mehrere elektrisch isolierende Innenelemente (8) in Form von Innenrohren oder Innenstäben angeordnet sind.

## Claims

1. Arrangement for storing electrical energy in an electrochemical cell, consisting of a stratification of a liquid anode (1), a liquid electrolyte (2) and a liquid cathode (3), wherein the anode (1) and the cathode (3) each consist of a liquid metal, semi-metal or a liquid metal or semi-metal alloy, and wherein the arrangement comprises an electrically insulating inner element (8) in the form of an inner tube or inner rod, **characterized in that** the inner element (8) extends in the stratification along the vertical axis of the arrangement through the anode (1), the electrolyte (2) and the cathode (3), wherein the liquid anode (1), the liquid electrolyte (2) and the liquid cathode (3) are arranged outside the inner element (8).

2. Arrangement according to Claim 1, **characterized in that** the inner element (8) is embodied as an inner tube and the arrangement comprises an electrical conductor (9) arranged in a manner extending in the inner tube (8), wherein the arrangement is configured for conducting an electric current through the electrical conductor (9), said electric current being directed counter to the current direction in the cell.

3. Arrangement according to Claim 2, **characterized in that** the arrangement is configured for passing the electric current from the anode (1) through the electrical conductor (9).

4. Arrangement according to Claim 2, **characterized in that** the arrangement is configured for passing the electric current from the cathode (3) through the electrical conductor (9).

5. Arrangement according to Claim 3, **characterized in that** the arrangement comprises a plurality of combined cells each having an inner tube (8), wherein the arrangement is configured in such a way that the electric current is conducted in each case downwards from the anode (1) through an electrical conductor (9) in the interior of the inner tubes of the plurality of combined cells.

6. Arrangement according to Claim 4, **characterized in that** the arrangement comprises a plurality of combined cells each having an inner tube (8), wherein the arrangement is configured in such a way that the current is conducted in each case upwards from the cathode (3) through an electrical conductor (9) in the interior of the inner tubes of the plurality of combined cells.

7. Arrangement according to Claim 1, **characterized in that** the inner element (8) is embodied as an inner tube and the arrangement comprises an electrical conductor (9) arranged in a manner extending in the inner tube (8), wherein the arrangement is configured for conducting an electric current through the conductor (9), said electric current being directed in the same direction as the current direction in the cell.

8. Arrangement according to Claim 1, **characterized in that** a plurality of electrically insulating inner elements (8) in the form of inner tubes or inner rods are arranged along the vertical axis of the arrangement.

## Revendications

1. Dispositif pour l'accumulation d'énergie électrique dans une cellule électrochimique, constitué d'une superposition d'une anode liquide (1), d'un électrolyte liquide (2) et d'une cathode liquide (3), dans lequel l'anode (1) et la cathode (3) sont respectivement constituées d'un métal liquide, d'un semi-métal ou d'un alliage de métal ou de semi-métal liquide, et dans lequel le dispositif comprend un élément intérieur (8) électriquement isolant sous la forme d'un tube intérieur ou d'une tige intérieure, **caractérisé en ce que** l'élément intérieur (8) s'étend dans la superposition le long de l'axe vertical du dispositif à travers l'anode (1), l'électrolyte (2) et la cathode (3), dans lequel l'anode liquide (1), l'électrolyte liquide (2) et la cathode liquide (3) sont disposés à l'extérieur de l'élément intérieur (8).

2. Dispositif selon la revendication 1, **caractérisé en ce que** l'élément intérieur (8) est réalisé sous la forme d'un tube intérieur et le dispositif comporte un conducteur électrique (9) qui est disposé de manière à s'étendre dans le tube intérieur (8), dans lequel le dispositif est conçu pour faire passer dans le conducteur électrique (9) un courant électrique de sens opposé au sens du courant passant dans la cellule.

3. Dispositif selon la revendication 2, **caractérisé en ce que** le dispositif est conçu pour faire passer dans le conducteur électrique (9) le courant électrique provenant de l'anode (1).

4. Dispositif selon la revendication 2, **caractérisé en ce que** le dispositif est conçu pour faire passer dans le conducteur électrique (9) le courant électrique provenant de la cathode (3).

5. Dispositif selon la revendication 3, **caractérisé en ce que** le dispositif comprend une pluralité de cellules combinées comportant respectivement un tube intérieur (8), dans lequel le dispositif est conçu de manière à ce que le courant électrique provenant de l'anode (1) soit respectivement amené à passer vers le bas dans un conducteur électrique (9) à l'intérieur des tubes internes de la pluralité de cellules combinées.

6. Dispositif selon la revendication 4, **caractérisé en ce que** le dispositif comprend une pluralité de cellules combinées comportant respectivement un tube intérieur (8), dans lequel le dispositif est conçu de manière à ce que le courant provenant de la cathode (3) soit respectivement amené à passer vers le haut dans un conducteur électrique (9) à l'intérieur des tubes internes de la pluralité de cellules combinées.

7. Dispositif selon la revendication 1, **caractérisé en ce que** l'élément intérieur (8) est réalisé sous la forme d'un tube intérieur et le dispositif comprend un conducteur électrique (9) qui est disposé de manière à s'étendre dans le tube intérieur (8), dans lequel le dispositif est conçu pour faire passer dans le conducteur (9) un courant électrique redressé dans le sens du courant passant dans la cellule.

8. Dispositif selon la revendication 1, **caractérisé en ce qu'**une pluralité d'éléments intérieurs (8) électriquement isolants sous forme de tubes intérieurs ou de tiges intérieures sont disposés le long de l'axe vertical du dispositif.
